# EUROPEAN PATENT APPLICATION

(11) **EP 4 586 092 A1**
(43) Date of publication of application: **16.07.2025**
(21) Application number: 25150567.3
(22) Date of filing: 07.01.2025
(51) Int. Cl.: G06F 9/50

(54) **MODULE DEPLOYMENT MANAGEMENT FOR CONSTRAINED DEVICES**

(30) Priority: 12.01.2024 US 202418412107
(71) Applicant: Microsoft Technology Licensing, LLC, Redmond, WA 98052 (US)
(72) Inventor: ABDELWAHAB, Sherif, Redmond, 98052 (US); TESSIORE, Lorenzo, Redmond, 98052 (US); RAJPUT, Deepthi Singh, Redmond, 98052 (US); KONG, Zhen, Redmond, 98052 (US); RAGHAVAN, Gopal, Redmond, 98052 (US)
(74) Representative: CMS Cameron McKenna Nabarro Olswang LLP

(57) **Abstract**

The techniques described herein improve module deployment and execution within a distributed environment and are applicable when a tenant of a cloud platform prefers, or even requires, that execution of a module occurs at a remote location. A module comprises a unit of programming code such as an application, a container, an update to a model (e.g., an artificial intelligence (AI) and/or machine learning (ML) model), etc. The remote location often includes endpoint devices (e.g., Internet of Things (IoT) devices, embedded devices) that have limited resources. Accordingly, the system is configured to divide the module into a first part and a second part. The system deploys the first part of the module for execution on the endpoint device. The system deploys the second part of the module for execution on an edge server device or a cloud server device which does not have the resource limitations of the endpoint device.

## Description

### BACKGROUND

A cloud platform such as MICROSOFT AZURE, AMAZON WEB SERVICES, GOOGLE CLOUD, etc. is configured to provide resources for various tenants. Stated alternatively, datacenters that comprise the cloud platform are useable to provide services to businesses, organizations, entities, and/or individual users (collectively referred to herein as tenants) at remote locations via network connections. These services can include deployment of modules to devices located at the remote locations. A module comprises a unit of programming code such as an application, a container, an update to a function or a model, and so forth.

The deployment of modules often relies upon a distributed environment. The distributed environment often includes the concept of a device hierarchy between the cloud platform and the remote locations. The concept of the device hierarchy represents a scenario where devices closer to and/or within the datacenters of the cloud platform (e.g., a cloud server device, an edge server device) are configured with more performant resources compared to the devices that are intended targets for the modules being deployed. Many of the devices that are intended targets for the modules being deployed are configured and/or executing within remote locations and are referred to as endpoint devices (e.g., Internet of Things (IoT) devices, embedded devices, user devices).

Generally, many types of endpoint devices are severely limited with respect to processing resources, storage resources, networking resources, and/or power resources (e.g., some IoT devices simply run on AA batteries). These resource limitations make it difficult, if not impossible, to deploy to and/or execute modules on the endpoint devices when the modules prefer, or even require, more performant resources (e.g., an accelerator component such as a graphics processing unit (GPU), a certain amount of storage resources).

For instance, applications configured with artificial intelligence (AI) and/or machine learning (ML) models are becoming an important part of applications and services offered by tenants, and modules (e.g., updates) for these AI and/or ML models are increasingly being deployed outside of the cloud platform, e.g., to endpoint devices that are configured at remote location(s). In one example, a remote location may include a factory within which hundreds or thousands of endpoint devices are connected to a remote network (e.g., a tenant's own on-premises network, a network provided by a cellular operator such as VERIZON, T-MOBILE, or AT&T) that serves the remote location by providing access to resources in the cloud platform. Consequently, deploying the aforementioned modules to the endpoint devices in the factory is difficult due to the number of endpoint devices and/or the limited resources of the endpoint devices.

### SUMMARY

The system described herein implements techniques for improving module deployment and execution within a distributed environment. Stated alternatively, the techniques described herein are applicable when a tenant of a cloud platform prefers, or even requires, that the execution of a module occurs at a remote location rather than within a datacenter of the cloud platform. As described above, a module comprises a unit of programming code such as an application, a container, an update to a function or a model (e.g., an artificial intelligence (AI) model and/or a machine learning (ML) model), and so forth. The remote location often includes endpoint devices (e.g., Internet of Things (IoT) devices, embedded devices, user devices) that have limited resources compared to devices that are higher in the device hierarchy (e.g., a cloud server device, an edge server device). Unfortunately, the deployment of the module to the endpoint devices and/or the execution of the module on the endpoint devices may be impossible or severely inefficient due to the limited resources.

To improve the deployment of a module to an endpoint device with limited resources and/or the execution of the module on the endpoint device, the system is configured to divide the module into at least a first part and a second part. The system deploys the first part of the module for execution on the endpoint device. The system deploys the second part of the module for execution on a device that is higher in the device hierarchy (e.g., an edge server device, a cloud server device) than the endpoint device. Thus, the device to which the second part of the module is deployed does not have the resource limitations of the endpoint device.

To divide the module into different parts, the system is configured to discover the resource capabilities of endpoint devices that are targeted for module deployment and execution. Continuing the example of a factory described above, the system discovers and stores the resource capabilities of the hundreds or thousands of endpoint devices that are configured therein. Next, the system identifies which of the endpoint devices are constrained, and classifies these endpoint devices as "constrained" devices. An endpoint device is identified and classified as a "constrained" device when the system determines that the discovered resource capabilities are incompatible with a capability parameter (e.g., a defined resource preference or resource requirement) associated with a module to be deployed to, and executed on, the endpoint device. The resource capabilities of an endpoint device are incompatible with a capability parameter if the capability parameter defines a capability that the endpoint device lacks.

In one example, the system determines an incompatibility when the capability parameter defines that a hardware accelerator component is preferred, or even required, for execution of the module and the capabilities of the endpoint device indicate a lack of the hardware accelerator component. Accordingly, the part of the module that prefers or requires the hardware accelerator component is not deployed to the endpoint device because the endpoint device is constrained. Rather, the deployment of the part of the module is offloaded from the constrained device to a non-constrained device that is higher in the device hierarchy (e.g., an edge server device, a cloud server device) than the constrained device and that is configured with the hardware accelerator component. In the context of video capture, a manufacturer of a first type of video capture device may configure the first type of video capture device with a graphics processing unit (GPU) while a manufacturer of a second type of video capture device may not configure the second type of video capture device with a GPU. Thus, the discovery process described above may yield that a module that prefers, or even requires, a GPU can be fully deployed to the first type of video capture device, while deployment of the module to the second type of video capture device should be divided.

In another example, the system determines an incompatibility when the capability parameter defines an amount of preferred or required storage for data associated with execution of the module and the capabilities of the endpoint device indicate a lack of the amount of preferred or required storage. Accordingly, the part of the module that prefers or requires the amount of preferred or required storage is not deployed to the endpoint device because the endpoint device is constrained. Rather, the deployment of the part of the module is offloaded from the constrained device a non-constrained device that is higher in the device hierarchy (e.g., an edge server device, a cloud server device) than the constrained device and that is configured with the amount of preferred or required storage.

One of the technical benefits of the division of the module into different parts for execution on both a constrained device and a non-constrained device is that a constrained device can now be registered as a virtual node in orchestration systems such as KUBERNETES, CLOUDFORMATION by AMAZON, and SERVICE FABRIC by MICROSOFT. Conventional orchestration systems that deploy modules are not equipped with mechanisms to discover or identify constrained devices because constrained devices do not have the resources to act as a virtual node in conventional orchestration systems. Moreover, there are many different types of endpoint devices due to variations in form factor, operating systems, firmware, and/or hardware. Consequently, each different type of endpoint device requires customized programming and/or device management, and for these reason(s), endpoint devices are typically ignored in deployment models generated by conventional orchestration systems. To illustrate, some types of endpoint devices use lower-layer embedded control protocols (e.g., MQ Telemetry Transport (MQTT)) to implement programming code updates. One problem associated with lower-layer embedded control protocols is that a tenant must restart the whole fleet of endpoint devices to implement the programming code updates using lower-layer embedded control protocols. In a factory with hundreds or thousands of endpoint devices, the restart of the whole fleet requires a large amount of power and processing cycles resulting in extensive downtime for the factory.

By enabling a constrained device to be registered as a virtual node in an orchestration system, modules can now be deployed to and/or executed on the constrained device "on the fly", or without the restart required by the lower-layer embedded control protocols. Stated alternatively, the modules can be deployed to and/or executed on the constrained device without interrupting current functions and/or processes the modules are updating, which thereby reducing or eliminating the amount of power and processing cycles typically required. Moreover, execution of the modules can more effectively be monitored in a continuous manner and unexpected activity can be efficiently detected and resolved.

In various examples, the modules can be written in a portable code format (e.g., WebAssembly (WASM)) that supports multiple different programming languages. The non-constrained device is configured to determine a programming language that is used by the hardware and/or firmware of a particular constrained device to which the module is being deployed. The non-constrained device then translates a portion of the code associated with the first part of the module into the programming language used by the particular constrained device. In one example, the code translation replaces device internal application programming interface (API) calls with network communications between the constrained device and the non-constrained device. Using the techniques described herein, a developer of the module only has to write code for the scenario that assumes the module is deployable and executable on a single targeted device. Stated alternatively, the developer of the module does not have to write code for the scenario that requires proxying between two different devices, thereby conserving resources. Consequently, the system described herein restructures the module so that the deployment and the execution of the module is configured for two different devices instead of one device.

In various examples, the non-constrained device can include additional verification for the translated code to be deployed to the constrained device. For instance, the non-constrained device can use a list of acceptable secure hash algorithm (SHA) values to validate the translated code. Additionally or alternatively, the non-constrained device can use operating system-based privilege models that only allow certain modules to invoke sensitive APIs. The non-constrained device can implement a policy to analyze the modules in accordance with the privilege models to verify that the deployment is safe. In a more specific example, the policy can state that "only modules signed with IT-Root certificate are allowed to invoke the ResetCamera() API on targeted devices." In an additional example, the non-constrained device ensures the translated code adheres to type and memory safety principles to prevent common vulnerabilities. More specifically, the non-constrained device can verify the execution safety of the translated code in a sandboxed environment that prevents out-of-bounds memory access, infinite loops, and other potentially dangerous operations.

In various examples, the system receives targeting policies associated with the module. Based on the targeting policies, the system identifies particular endpoint devices as target devices for deployment of the module. The endpoint devices identified can then be evaluated with respect to resource capabilities and the capability parameter associated with the module. In one more specific example, the targeting policies associated with a module directed to AI object detection may specify that devices with cameras are targeted. The system described herein then determines first types of devices with cameras that have the resource capabilities to execute the AI object detection on their own and second types of devices with cameras that do not have the resource capabilities to execute the AI object detection on their own.

In various examples, the system creates a clone of the constrained device in the non-constrained device. To create the clone, a state of the constrained device is replicated on the non-constrained device. This enables offloading of execution of the second part of the module from the constrained device to the non-constrained device.

This Summary is provided to introduce a selection of concepts in a simplified form that are further described blow in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 illustrates an example environment in which a system improves the deployment of a module from a cloud platform to endpoint devices configured in a remote location.
FIG. 2 illustrates how a constrained device can be registered as a virtual node in an orchestration system via the use of more performant resources configured on a non-constrained device.
FIG. 3 illustrates how a non-constrained device translates and validates the code for the part of the module to be deployed to a constrained device.
FIG. 4 is a flowchart depicting an example process for improving the deployment of a module from a cloud platform to endpoint devices configured in a remote location.
FIG. 5 is a flowchart depicting an example process for translating and validating code to be deployed to a constrained device.
FIG. 6 is an example computing system in accordance with the present disclosure.

### DETAILED DESCRIPTION

The system described herein implements techniques for improving module deployment and execution within a distributed environment. Stated alternatively, the techniques described herein are applicable when a tenant of a cloud platform prefers, or even requires, that the execution of a module occurs at a remote location rather than within a datacenter of the cloud platform. As described above, a module comprises a unit of programming code such as an application, a container, an update to a function or a model (e.g., an artificial intelligence (AI) model and/or a machine learning (ML) model), and so forth. The remote location often includes endpoint devices (e.g., Internet of Things (IoT) devices, embedded devices, user devices) that have limited resources compared to devices that are higher in a device hierarchy (e.g., a cloud server device, an edge server device). Unfortunately, the deployment of the module to the endpoint devices and/or the execution of the module on the endpoint devices may be impossible or severely inefficient due to the limited resources.

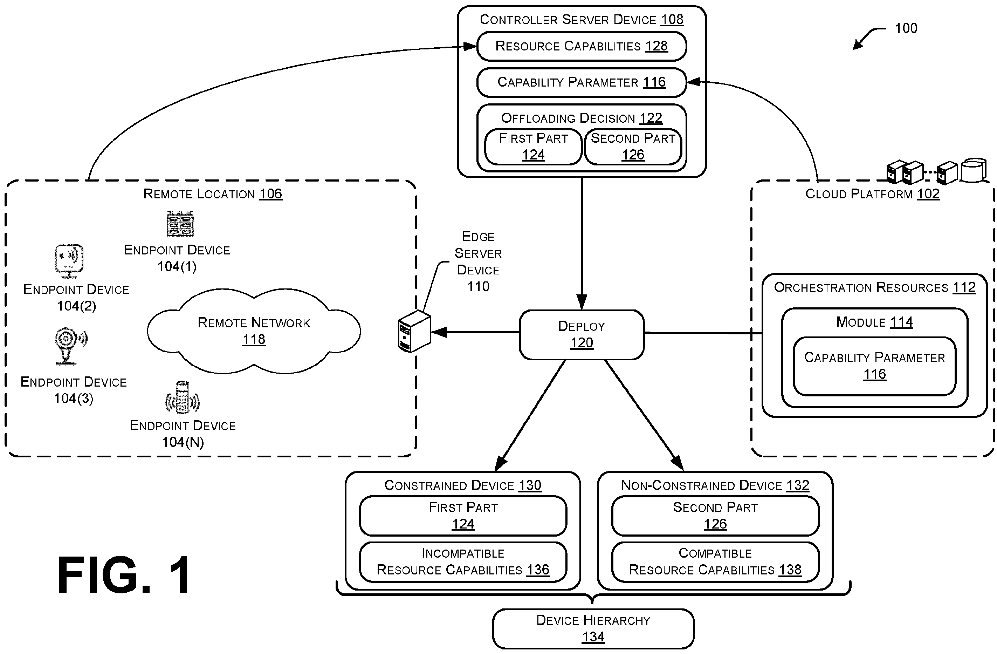

FIG. 1 illustrates an example environment 100 in which a system improves the deployment of a module from a cloud platform 102 to endpoint devices 104(1-N) configured in a remote location 106. The system claimed herein includes a controller server device 108, an edge server device 110, or a combination of the controller server device 108 and the edge server device 110. In one example, the functionality performed by the controller server device 108 and the edge server device 110 can be performed by one device (e.g., the controller server device 108 is the edge server device 110).

The cloud platform 102 comprises one or more datacenters configured with orchestration resources 112 for an orchestration system. The orchestration system can be KUBERNETES, CLOUDFORMATION by AMAZON, and SERVICE FABRIC by MICROSOFT. In the context of KUBERNETES, the orchestration resources 112 can include GitOps, Flux Continuous Delivery, a scheduler, and so forth.

Based on input from a developer, the orchestration resources 112 are configured to generate a module 114 for deployment to and execution on the endpoint devices 104(1-N) configured in the remote location 106 or multiple different remote locations 106. The number N of endpoint devices can be in the tens, hundreds, thousands, or even millions. The module 114 includes a capability parameter 116. As described above, the remote location 106 may belong to a tenant of the cloud platform 102, and thus, the module 114 is generated based on code developed by the tenant for a specific purpose. For instance, the specific purpose may be to update an AI model and/or a ML model with retraining data to avoid model decay and/or model drift. Accordingly, the capability parameter 116 reflects a resource preference, or a resource requirement, related to the deployment and/or execution of the module 114.

In various examples, the remote location 106 includes a remote network 118 (e.g., a tenant's own on-premises network, a network provided by a cellular operator such as VERIZON, T-MOBII,E, or AT&T) to which the endpoint devices 104(1-N) are connected. Moreover, the remote network 118 can connect multiple remote locations 106 and provide access to the orchestration resources 112 in the cloud platform 102. Accordingly, the remote network 118, the cloud platform 102, and the networks and/or networking resources in between compose the distributed environment within which the module 114 is deployed 120.

The number of edge server devices 110 configured on an edge, or boundary, of the remote network 118 may vary from one tenant of the cloud platform 102 to another. This variation may depend on a number of factors, such as type of data being processed, an amount of data being processed, the desired speed at which the data is to be processed, and so forth. For example, a company with multiple different office locations in different commercial buildings may configure an edge server device 110 for each office location (e.g., each commercial building). In another example, a traffic monitoring organization that manages a network of traffic cameras may configure an edge server device 110 for a group of geographically proximate intersections (e.g., four, ten, twenty, etc.) where a subset of the traffic cameras are configured. In yet another example, a municipality agency that positions employees and/or devices within a city may configure a number of edge server devices 110 throughout the city. In a final example, an electronic commerce company that operates a large warehouse for the storage and shipment of items may configure a number of edge server devices 110 (e.g., two, three, four, etc.) in the large warehouse. Consequently, while FIG. 1 illustrates a single edge server device 110, it is understood in the context of this disclosure that a cluster of edge server devices 110 can geographically span multiple remote locations 106 that include a large number of endpoint devices 104(1-N) or a single endpoint device (e.g., a network connected automobile moving around a city).

The controller server device 108 is configured to make an offloading decision 122. The offloading decision 122 enables the controller server device 108 to divide the module 114 into at least a first part 124 and a second part 126. In one example, the division of the module 114 into parts may be predefined by a developer based on different elements in the code. In another example, the division of the module 114 into parts may be performed by the controller server device 108 based on an analysis of the different elements in the code.

To inform the offloading decision 122, the controller server device 108 is configured to discover the resource capabilities 128 (e.g., the presence or lack of a hardware accelerator component, the amount of data storage) of the endpoint devices 104(1-N) configured in the remote location 106. Continuing the example of a factory described above, the controller server device 108 discovers and stores the resource capabilities 128 of the hundreds or thousands of endpoint devices 104(1-N) that are configured therein. Next, the controller server device 108 identifies which of the endpoint devices 104(1-N) are constrained, and classifies these endpoint devices 104(1-N) as "constrained" devices. An endpoint device 104(1-N) is identified and classified as a "constrained" device 130 when the controller server device 108 determines that the discovered resource capabilities 128 are incompatible with the capability parameter 116 associated with the module 114.

Based on the offloading decision 122, the first part 124 of the module 114 is deployed 120 for execution on the constrained device 130, while the second part 126 of the module 114 is deployed 120 for execution on a non-constrained device 132, or a cluster of non-constrained devices, that is higher in the device hierarchy 134. Accordingly, the constrained device 130 is a first type of device and the non-constrained device 132 is a second type of device with resources that are non-existent on the first type of device. In one example, the non-constrained device 132 is the edge server device 110 associated with the remote network 118 and/or remote location 106. In another example, the non-constrained device 132 is a cloud server device within the cloud platform 102. In yet a further example, the non-constrained device 132 is a gateway device associated with the remote network 118 and/or remote location 106. Accordingly, FIG. 1 illustrates that the constrained device 130 has incompatible resource capabilities 136 for the capability parameter 116 and that the non-constrained device 132 has compatible resource capabilities 138 for the capability parameter 116.

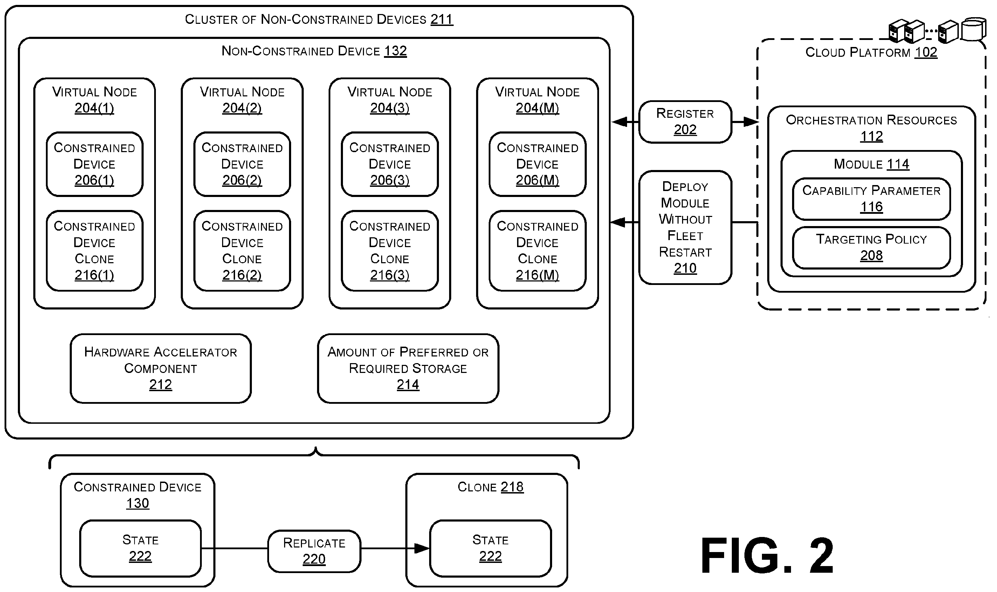

Moving on to FIG. 2, the division of the module 114 into a first part 124 and a second part 126, for respective execution on both the constrained device 130 and the non-constrained device 132, enables the orchestration resources 112 to register 202 the constrained device 130 as a virtual node (e.g., a KUBERNETES node). Accordingly, a single non-constrained device 132 can configure and execute multiple different virtual nodes 204(1-M) that correspond to multiple different endpoint devices, identified from endpoint devices 104(1-N), that are classified as constrained. Therefore, the virtual nodes 204(1-M) are respectively associated with constrained devices 206(1-M), where M is a positive integer number (e.g., one, two, three, ten, twenty, fifty).

In various examples, a targeting policy 208 is associated with the module 114. The controller server device 108 is configured to use the targeting policy 208 to identify which ones of the endpoint devices 104(1-N) are targeted for deployment of the module 114. Moreover, the controller server device 108 is configured to use the targeting policy 208 to restrict access to constrained devices and non-constrained devices. That is, the controller server device 108 can evaluate the targeted endpoint devices with respect to their resource capabilities 128 and the capability parameter 116 to determine a compatibility or an incompatibility. The resource capabilities 128 of a targeted endpoint device are incompatible with a capability parameter 116 if the capability parameter defines a capability that the targeted endpoint device lacks. In a specific example, the targeting policy 208 associated with the module 114 is directed to AI object detection and specifies that endpoint devices with cameras are targeted. The controller server device 108 then determines first types of endpoint devices with cameras that have the resource capabilities 128 to execute the AI object detection on their own and second types of endpoint devices with cameras that do not have the resource capabilities 128 to execute the AI object detection on their own.

As described above, conventional orchestration systems that deploy modules are not equipped with mechanisms to discover or identify constrained devices because constrained devices do not have the resources to act as a virtual node in conventional orchestration systems. Moreover, there are many different types of endpoint devices due to variations in form factor, operating systems, firmware, and/or hardware. Consequently, not all types of endpoint devices are constrained. Furthermore, different types of endpoint devices require customized programming and/or device management, and for these reason(s), endpoint devices are typically ignored in deployment models generated by conventional orchestration systems. For example, some types of endpoint devices use lower-layer embedded control protocols (e.g., MQ Telemetry Transport (MQTT)) to implement programming code updates. One problem associated with these lower-layer embedded control protocols is that a tenant must restart the whole fleet of endpoint devices to implement the programming code updates using lower-layer embedded control protocols. In a factory, which is an example of the remote location 106, with hundreds or thousands of endpoint devices, the restart of the whole fleet requires a large amount of power and processing cycles resulting in extensive downtime for the factory.

By separating the module 114 into different parts 124, 126 for deployment to, and execution on, a constrained device 130 and a non-constrained device 132, the techniques described herein allow for constrained devices 206(1-M) to be recognized as virtual nodes 204(1-M) in conventional orchestration systems. Stated alternatively, the techniques described herein abstract constrained devices 206(1-M) (e.g., IoT devices, embedded devices, user devices), that previously were unable to execute a particular module 114 (e.g., a container in KUBERNETES), so that they can be registered as virtual nodes 204(1-M) that can now execute the module 114. Consequently, the orchestration resources 112 can deploy the module 114 to the virtual nodes 204(1-M) without having to implement a fleet restart 210 for the constrained devices 206(1-M). This reduces or eliminates the large amount of power and processing cycles typically needed.

In various examples and based on the orchestration resources 112 used for deployment 120, the non-constrained device 132 is a cluster of non-constrained devices 211, or is part of a cluster of non-constrained devices 211. Accordingly, the virtual nodes 204(1-M) can be scheduled over a cluster of non-constrained devices 211.

In one example, the capability parameter 116 defines that a hardware accelerator component 212 is preferred, or even required, for execution of the module 114 and the resource capabilities 128 of the constrained devices 206(1-M) indicate a resource incompatibility due to a lack of the hardware accelerator component. Accordingly, the second part 126 of the module 114 that prefers or requires the hardware accelerator component 212 is not deployed to the constrained devices 206(1-M). Rather, the deployment of the second part 126 of the module 114 is offloaded from the constrained device 130 to the non-constrained device 132 that is configured with the hardware accelerator component 212. In the context of video capture, a manufacturer of a first type of video capture device may configure the first type of video capture device with a graphics processing unit (GPU) while a manufacturer of a second type of video capture device may not configure the second type of video capture device with a GPU. Thus, the discovery process described above may yield that a module that prefers, or even requires, a GPU can be fully deployed to the first type of video capture device, while deployment of the module to the second type of video capture device should be divided. That is, the second type of video capture device is determined to implement the part of the module directed to collecting video frames and the other part of the module directed to processing the video frames is offloaded from the second type of video capture device to the non-constrained device 132.

In another example, the capability parameter 116 defines an amount of preferred or required storage 214 for data associated with execution of the module 114 and the resource capabilities 128 of the constrained devices 206(1-M) indicate a resource incompatibility due to a lack of the amount of preferred or required storage. Accordingly, the second part 126 of the module 114 that prefers or requires the amount of preferred or required storage is not deployed to the constrained devices 206(1-M). Rather, the deployment of the second part 126 of the module 114 is offloaded from the constrained device 130 to the non-constrained device 132 that is configured with the amount of preferred or required storage 214 (e.g., an amount of storage that meets established thresholds for a KUBERNETES volume).

In various examples, the non-constrained device 132 creates clones 216(1-M) for the constrained devices 206(1-M) within the virtual nodes 204(1-M). As shown, the non-constrained device creates a clone 218 by replicating 220 a state 222 of the constrained device 130 within a virtual node on the non-constrained device 132. The state replication 220 enables offloading of execution of the second part 126 of the module 114 from the constrained device 130 to the non-constrained device 132. Moreover, the state replication 220 captures (e.g., communicates) state changes from the constrained device 130 to the clone 218, and vice versa. In a more specific example, the constrained device 130 is a temperature sensor that writes a sensed temperature value to disk. This disk write qualifies as a state change, and thus, the temperature value is replicated 220 on the clone 218.

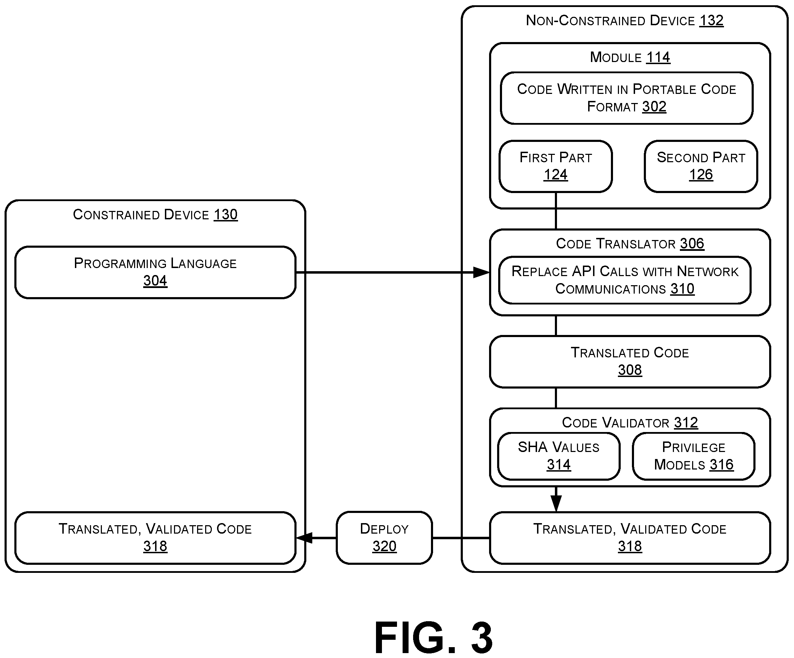

FIG. 3 illustrates how a non-constrained device translates and validates the code for the part of the module to be deployed to a constrained device. As described above, by enabling a constrained device 130 to be registered as a virtual node in an orchestration system (thereby enabling the orchestration system to consider the virtual node for scheduling), a module 114 can now be deployed to and/or executed on the constrained device 130 without the restart required by the lower-layer embedded control protocols. This may be referred to as "on the fly" deployment. Stated alternatively, the module 114 can be deployed to and/or executed on the constrained device 130 without interrupting the current functions and/or processes the module 114 is updating. Moreover, execution of the modules can more effectively be monitored in a continuous manner and unexpected activity can be efficiently detected and resolved.

In various examples, the module 114 includes code that is written in a portable code format 302 (e.g., WebAssembly (WASM)). A portable code format supports multiple different programming languages. The non-constrained device 132 is configured to determine a programming language 304 that is used by the hardware and/or firmware of a particular constrained device 130 to which the module 114 is targeted for deployment.

In various examples, the non-constrained device 132 includes a code translator 306 that is configured translate the portion of the code 302 associated with the first part 124 of the module 114 from the portable code format into the programming language 304 used by the constrained device 130. This translation produces translated code 308 to be deployed to the constrained device 130. In one example, the code translation replaces device internal application programming interface (API) calls with network communications 310 between the constrained device 130 and the non-constrained device 132. Using the techniques described herein, a developer of the module 114 only has to write code for the scenario that assumes the module 114 is deployable and executable on a single targeted device, even though such a device may be identified and classified as constrained. Stated alternatively, the developer of the module 114 does not have to write code for the scenario that requires proxying between two different devices. Consequently, the techniques described herein restructures the module 114 so that the deployment and the execution of the module is configured for two different devices instead of one device.

In various examples, the non-constrained device 132 includes a code validator 312 that implements additional verification for the translated code 308 to be deployed to the constrained device 130. One reason to implement the additional verification is to ensure that the translated code 308 will not restart the constrained device 130. In one example, the code validator 312 uses a list of acceptable secure hash algorithm (SHA) values 314 to validate the translated code. That is, the code validator 312 is configured to use a SHA to hash the translated code and compare the output value to the list of acceptable SHA values to confirm there is a match before deploying the translated code 308. In another example, the code validator 312 uses operating system-based privilege models 316 that only allow certain modules to invoke sensitive APIs. The code validator 312 can implement a policy to analyze the modules in accordance with the privilege models 316 to verify that the deployment is safe. In a more specific example, the policy can state that "only modules signed with IT-Root certificate are allowed to invoke the ResetCamera() API on targeted devices." Ultimately, the code validator 312 outputs translated, validated code 318 for the first part 124 of the module 114 and deploys 320 the translated, validated code 318 to the constrained device 130 for execution. In an additional example, the code validator 312 ensures the translated code 308 adheres to type and memory safety principles to prevent common vulnerabilities. More specifically, the code validator 312 can verify the execution safety of the translated code 308 in a sandboxed environment (e.g., code execution isolation) that prevents out-of-bounds memory access, infinite loops, and other potentially dangerous operations.

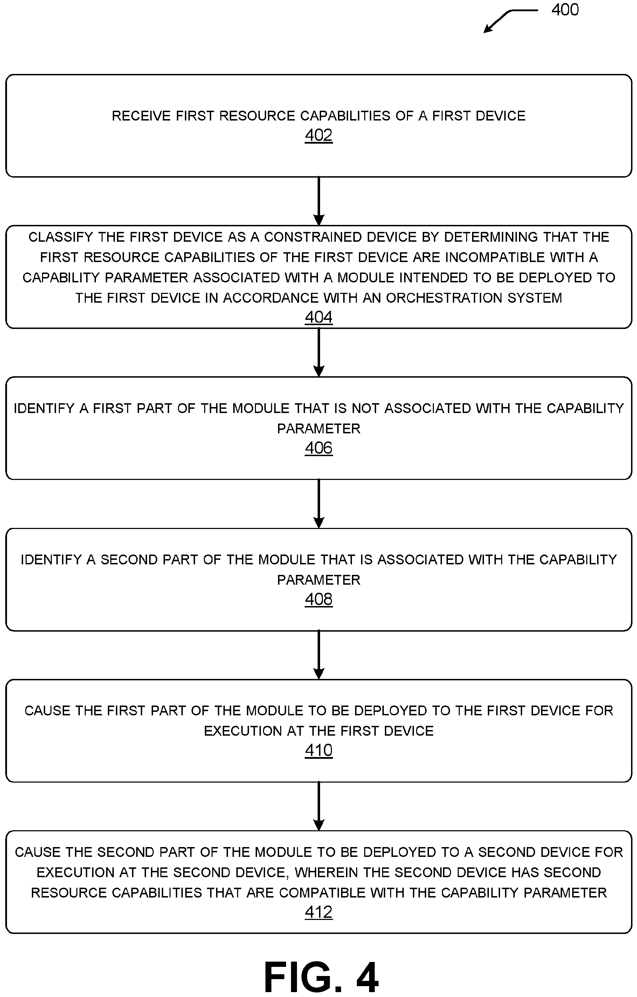

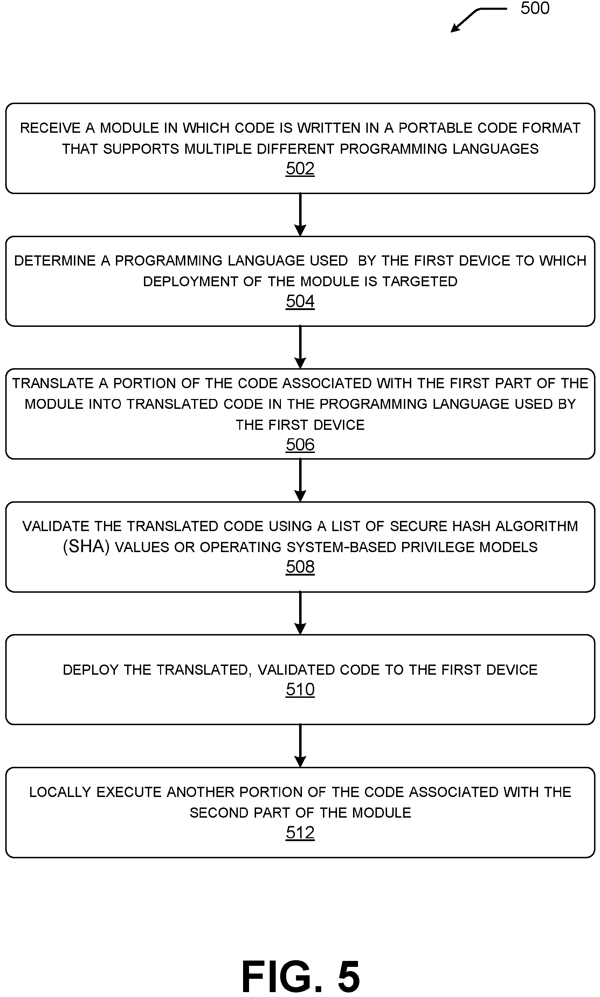

Proceeding to FIGS. 4 and 5, aspects of methods 400 and 500 associated with improving the deployment of a module from a cloud platform to endpoint devices configured in a remote location and translating/ validating code to be deployed to a constrained device are shown and described. With respect to FIG. 4, the process 400 begins at operation 402 where the controller server device 108 receives first resource capabilities of a first device. As described above, the first device is an endpoint device 104(1) (e.g., an IoT device, an embedded device, a user device) associated with a remote location 106, and the first resource capabilities can be received as part of a discovery process implemented by the controller server device 108 to understand the varying resource capabilities of different types of endpoint devices 104(1-N) that may be targeted for module deployment. In various examples, resource capabilities are received as part of a scheduling process that generates a virtual node corresponding to the first device on a second device (e.g., the non-constrained device 132) that is part of a cluster of devices (e.g., the cluster of non-constrained devices 211 in FIG. 2).

At operation 404, the controller server device 108 classifies the first device as a constrained device by determining that the first resource capabilities of the first device are incompatible with a capability parameter associated with a module intended to be deployed to the first device in accordance with an orchestration system (e.g., KUBERNETES). In one example, the capability parameter 116 defines a preferred or required hardware accelerator component 212 (e.g., a graphics accelerator such as a GPU) for processing data associated with execution of a module 114 and the first resource capabilities of the first device indicate a lack of the preferred or required hardware accelerator component 212. In another example, the capability parameter 116 defines an amount of preferred or required storage 214 for data associated with execution of the module 114 and the first resource capabilities of the first device indicate a lack of the amount of preferred or required storage 214. Consequently, an incompatibility between the capability parameter 116 and the first resource capabilities exists.

At operation 406, in response to classifying the first device as the constrained device, the controller server device 108 identifies a first part of the module that is not associated with the capability parameter. In various examples, the first part 124 of the module 114 that is not associated with the capability parameter 116 includes the code that does not prefer or require the use of resources associated with the capability parameter 116. At operation 408, in response to classifying the first device as the constrained device, the controller server device 108 identifies a second part of the module that is associated with the capability parameter. In various examples, the second part 126 of the module 114 that is associated with the capability parameter 116 includes the code that does prefer or require the use of resources associated with the capability parameter 116.

At operation 410, the controller server device 108 causes the first part of the module to be deployed to the first device for execution at the first device. Moreover, at operation 412, the controller server device 108 causes the second part of the module to be deployed to a second device for execution at the second device. As described above, the second device is a non-constrained device 132 that has second resource capabilities that are compatible with the capability parameter 116. For example, the non-constrained device 132 is an edge server device (e.g., edge server device 110) or a cloud server device (e.g., in the cloud platform 102) that includes the preferred or required hardware accelerator component 212 or the amount of preferred or required storage 214 (e.g., a KUBERNETES volume). The term "causing" in this context includes the decision to offload the execution of the second part 126 of the module 114 from the first (constrained) device 130 to the second (non-constrained) device 132 and the generation and/or transmission of instructions to carry out the offloading.

Turning to FIG. 5, at operation 502, a non-constrained device receives a module in which code is written in a portable code format that supports multiple different programming language. In one example, the portable code format comprises WebAssembly (WASM). Moreover, as described above, the module 114 has been divided into a first part 124 and a second part 126.

At operation 504, the non-constrained device determines a programming language of the multiple different programming language used by the first device to which deployment of the module is targeted.

At operation 506, the non-constrained device translates a portion of the code associated with the first part of the module into translated code in the programming language used by the first device.

At operation 508, the non-constrained device validates the translated code using a list of acceptable secure hash algorithm (SHA) values or operating system-based privilege models.

At operation 510, the non-constrained device deploys the translated, validated code to the first device so that the first part of the module can be executed on the first device.

Further, at operation 512, the non-constrained device locally executes another portion of the code associated with the second part of the module. As described above, this portion of the code prefers or requires the use of resources associated with the capability parameter 116. Furthermore, the non-constrained device may restrict access to device capabilities according to a policy configuration.

For ease of understanding, the methods discussed in this disclosure are delineated as separate operations represented as independent blocks. However, these separately delineated operations should not be construed as necessarily order dependent in their performance. The order in which the methods are described is not intended to be construed as a limitation, and any number of the described blocks may be combined in any order to implement the methods or alternate methods. Moreover, it is also possible that one or more of the provided operations is modified or omitted.

The particular implementation of the technologies disclosed herein is a matter of choice dependent on the performance and other requirements of a computing device. Accordingly, the logical operations described herein may be referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, handheld computing devices, microprocessor-based, programmable consumer electronics, combinations thereof, and the like.

The operations of methods 400 and/or 500 can be implemented, at least in part, by a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

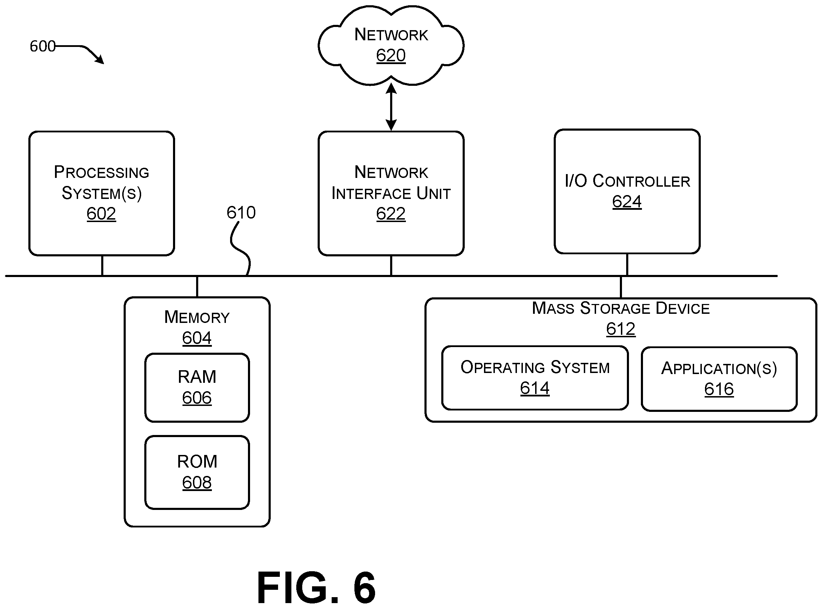

FIG. 6 shows additional details of an example computer architecture 600 for a device, such as a computer or a server configured within the environment of FIG. 1, capable of executing computer instructions (e.g., a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location. Moreover, the systems discussed herein can be provided as a distributed computing system such as a cloud service.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

The disclosure presented herein also encompasses the subject matter set forth in the following clauses.

Example Clause A, a method comprising: receiving first resource capabilities of a first device; classifying the first device as a constrained device by determining that the first resource capabilities of the first device are incompatible with a capability parameter associated with a module intended to be deployed to the first device in accordance with an orchestration system; in response to classifying the first device as the constrained device: identifying a first part of the module that is not associated with the capability parameter; and identifying a second part of the module that is associated with the capability parameter; causing the first part of the module to be deployed to the first device for execution at the first device; and causing the second part of the module to be deployed to a second device for execution at the second device, wherein the second device has second resource capabilities that are compatible with the capability parameter.

Example Clause B, the method of Example Clause A, wherein causing the second part of the module to be deployed to the second device enables the first device to be registered as a virtual node in the orchestration system.

Example Clause AB, the method of Example Clause A, wherein the first device is a first type of device; the second device is a second type of device that is different than the first type of device; and causing the second part of the module to be deployed to the second device enables the first device to be registered as a virtual node in the orchestration system.

Example Clause C, the method of Example Clause B or Clause AB, further comprising creating a clone of the first device in the second device to enable the first device to be registered as the virtual node in the orchestration system, wherein the clone replicates a state of the first device in the second device thereby enabling offloading of execution of the second part of the module from the first device to the second device.

Example Clause D, the method of any of Example Clauses A through C, wherein: the module includes code written in a portable code format that supports multiple different programming languages; and the method further comprises: determining a programming language of the multiple different programming language used by the first device; and translating a portion of the code associated with the first part of the module into translated code in the programming language used by the first device.

Example Clause E, the method of Example Clause D, wherein the translating replaces device internal application programming interface calls in the portion of the code with network communications between the first device and the second device.

Example Clause F, the method of Example Clause D, further comprising validating the translated code using a list of acceptable secure hash algorithm (SHA) values or operating system-based privilege models.

Example Clause G, the method of Example Clause D, wherein the translating is implemented in a sandboxed environment that prevents out-of-bounds memory access and infinite loops.

Example Clause H, the method of any of Example Clauses A through G, wherein: the capability parameter defines a preferred or required hardware accelerator component for processing data associated with execution of the module; the first resource capabilities of the first device indicate a lack of the preferred or required hardware accelerator component; the second part of the module is related to the processing of the data; and deployment of the second part of the module to the second device causes the data to be processed using the preferred or required hardware accelerator component at the second device.

Example Clause I, the method of any of Example Clauses A through G, wherein: the capability parameter defines an amount of preferred or required storage for data associated with execution of the module; the first resource capabilities of the first device indicate a lack of the amount of preferred or required storage; the second part of the module is related to storing the data; and deployment of the second part of the module to the second device causes the data to be stored in a first storage volume at the second device rather than a second storage volume at the first device.

Example Clause J, the method of any of Example Clauses A through I, further comprising: receiving a targeting policy associated with the module; and identifying the first device as a target device for deployment of the module based on the targeting policy.

Example Clause K, the method of any of Example Clauses A through J, wherein: the first device comprises an Internet of Things device; and the second device comprises one of an edge server device or a cloud server device.

Example Clause L, the method of any of Example Clauses A through K, wherein the module comprises an update to an artificial intelligence model or a machine learning model, the update configured to avoid model decay and model drift.

Example Clause M, a device comprising: a processing system; and computer storage media storing instructions that, when executed by the processing system, cause the device to perform operations comprising: receiving a module that includes code written in a portable code format that supports multiple different programming languages, wherein the module is divided into a first part to be deployed to a constrained device and a second part to be executed on the device; determining a programming language of the multiple different programming language used by the constrained device; translating a portion of the code associated with the first part into translated code in the programming language used by the constrained device; validating the translated code using a list of acceptable secure hash algorithm (SHA) values or operating system-based privilege models; and in response to the validating, deploying the translated code to the constrained device.

Example Clause N, the device of Example Clause M, wherein the operations further comprise locally executing another portion of the code associated with the second part of the module.

Example Clause O, the device of Example Clause M or Example Clause N, wherein the translating replaces device internal application programming interface calls in the portion of the code with network communications between the constrained device and the device.

Example Clause P, a system comprising: a processing system; and computer storage media storing instructions that, when executed by the processing system, cause the system to perform operations comprising: receiving first resource capabilities of a first device; classifying the first device as a constrained device by determining that the first resource capabilities of the first device are incompatible with a capability parameter associated with a module intended to be deployed to the first device in accordance with an orchestration system; in response to classifying the first device as the constrained device: identifying a first part of the module that is not associated with the capability parameter; and identifying a second part of the module that is associated with the capability parameter; causing the first part of the module to be deployed to the first device for execution at the first device; and causing the second part of the module to be deployed to a second device for execution at the second device, wherein the second device has second resource capabilities that are compatible with the capability parameter.

Example Clause Q, the system of Example Clause P, wherein causing the second part of the module to be deployed to the second device enables the first device to be registered as a virtual node in the orchestration system.

Example Clause R, the system of Example Clause P or Example Clause Q, wherein: the capability parameter defines a preferred or required hardware accelerator component for processing data associated with execution of the module; the first resource capabilities of the first device indicate a lack of the preferred or required hardware accelerator component; the second part of the module is related to the processing of the data; and deployment of the second part of the module to the second device causes the data to be processed using the preferred or required hardware accelerator component at the second device.

Example Clause S, the system of Example Clause P or Example Clause Q, wherein: the capability parameter defines an amount of preferred or required storage for data associated with execution of the module; the first resource capabilities of the first device indicate a lack of the amount of preferred or required storage; the second part of the module is related to storing the data; and deployment of the second part of the module to the second device causes the data to be stored in a first storage volume at the second device rather than a second storage volume at the first device.

Example Clause T, the system of any one of Example Clauses P through S, wherein the operations further comprise: receiving a targeting policy associated with the module; and identifying the first device as a target device for deployment of the module based on the targeting policy.

The techniques described herein improve module deployment and execution within a distributed environment and are applicable when a tenant of a cloud platform prefers, or even requires, that execution of a module occurs at a remote location. A module comprises a unit of programming code such as an application, a container, an update to a model (e.g., an artificial intelligence (AI) and/or machine learning (ML) model), etc. The remote location often includes endpoint devices (e.g., Internet of Things (IoT) devices, embedded devices) that have limited resources. Accordingly, the system is configured to divide the module into a first part and a second part. The system deploys the first part of the module for execution on the endpoint device. The system deploys the second part of the module for execution on an edge server device or a cloud server device which does not have the resource limitations of the endpoint device.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the inventions disclosed herein. The accompanying claims and their equivalents are intended to cover such forms or modifications as would fall within the scope of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
receiving (402) first resource capabilities (128) of a first device (104(1));
classifying (404) the first device as a constrained device (130) by determining that the first resource capabilities of the first device are incompatible with a capability parameter (116) associated with a module (114) intended to be deployed to the first device in accordance with an orchestration system (112);
in response to classifying the first device as the constrained device:
identifying (406) a first part (124) of the module that is not associated with the capability parameter; and
identifying (408) a second part (126) of the module that is associated with the capability parameter;
causing (410) the first part of the module to be deployed to the first device for execution at the first device; and
causing (412) the second part of the module to be deployed to a second device (132) for execution at the second device, wherein the second device has second resource capabilities (138) that are compatible with the capability parameter.

2. The method of claim 1, wherein:
the first device is a first type of device;
the second device is a second type of device that is different than the first type of device; and
causing the second part of the module to be deployed to the second device enables the first device to be registered as a virtual node in the orchestration system.

3. The method of claim 2, further comprising creating a clone of the first device in the second device to enable the first device to be registered as the virtual node in the orchestration system, wherein the clone replicates a state of the first device in the second device thereby enabling offloading of execution of the second part of the module from the first device to the second device.

4. The method of any one of claims 1 through 3, wherein:
the module includes code written in a portable code format that supports multiple different programming languages; and
the method further comprises:
determining a programming language of the multiple different programming language used by the first device; and
translating a portion of the code associated with the first part of the module into translated code in the programming language used by the first device.

5. The method of claim 4, wherein the translating replaces device internal application programming interface calls in the portion of the code with network communications between the first device and the second device.

6. The method of claim 4 or claim 5, further comprising validating the translated code using a list of acceptable secure hash algorithm, SHA, values or operating system-based privilege models.

7. The method of any one of claims 4 through 6, wherein the translating is implemented in a sandboxed environment that prevents out-of-bounds memory access and infinite loops.

8. The method of any one of claims 1 through 7, wherein:
the capability parameter defines a preferred or required hardware accelerator component for processing data associated with execution of the module;
the first resource capabilities of the first device indicate a lack of the preferred or required hardware accelerator component;
the second part of the module is related to the processing of the data; and
deployment of the second part of the module to the second device causes the data to be processed using the preferred or required hardware accelerator component at the second device.

9. The method of any one of claims 1 through 7, wherein:
the capability parameter defines an amount of preferred or required storage for data associated with execution of the module;
the first resource capabilities of the first device indicate a lack of the amount of preferred or required storage;
the second part of the module is related to storing the data; and
deployment of the second part of the module to the second device causes the data to be stored in a first storage volume at the second device rather than a second storage volume at the first device.

10. The method of any one of claims 1 through 9, further comprising:
receiving a targeting policy associated with the module; and
identifying the first device as a target device for deployment of the module based on the targeting policy.

11. The method of any one of claims 1 through 10, wherein:
the first device comprises an Internet of Things device; and
the second device comprises one of an edge server device or a cloud server device.

12. The method of any one of claims 1 through 11, wherein the module comprises an update to an artificial intelligence model or a machine learning model, the update configured to avoid model decay and model drift.

13. A device (132) comprising:
a processing system (602); and
computer storage media (604, 612) storing instructions that, when executed by the processing system, cause the device to perform operations comprising:
receiving (502) a module that includes code written in a portable code format (302) that supports multiple different programming languages, wherein the module is divided into a first part (124) to be deployed to a constrained device (130) and a second part (126) to be executed on the device;
determining (504) a programming language (304) of the multiple different programming language used by the constrained device;
translating (506) a portion of the code associated with the first part into translated code (308) in the programming language used by the constrained device;
validating (508) the translated code using a list of acceptable secure hash algorithm, SHA, values (314) or operating system-based privilege models (316); and
in response to the validating, deploying (510) the translated code (318) to the constrained device.

14. The device of claim 13, wherein the operations further comprise locally executing another portion of the code associated with the second part of the module.

15. A system (108) comprising:
a processing system (602); and
computer storage media (604, 612) storing instructions that, when executed by the processing system, cause the system to perform a method according to any of claims 1 to 12.
